(19) Europäisches Patentamt
European Patent Office
Office européen des brevets

(11) EP 2 886 819 B1

(12) EUROPEAN PATENT SPECIFICATION

(45) Date of publication and mention of the grant of the patent:
02.11.2016 Bulletin 2016/44

(51) Int Cl.:
D04H 1/46 (2012.01)        F01N 3/28 (2006.01)
F01N 13/18 (2010.01)       F01N 3/021 (2006.01)

(21) Application number: 14185538.7

(22) Date of filing: 19.09.2014

(54) **Method for producing holding sealing material and method for manufacturing exhaust gas purifying apparatus**

Verfahren zur Herstellung des Haltedichtungsmaterials und einer Abgasreinigungsvorrichtung

Procédé de fabrication d'un tel matériau et d'un appareil de purification de gaz d'échappement

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 20.09.2013 JP 2013195586

(43) Date of publication of application:
24.06.2015 Bulletin 2015/26

(73) Proprietor: Ibiden Co., Ltd.
Ogaki-shi
Gifu 503-8604 (JP)

(72) Inventors:
• Sugiura, Yuya
Aichi, 444-1301 (JP)
• Watanabe, Tatsuya
Aichi, 444-1301 (JP)
• Ito, Yasutaka
Aichi, 444-1301 (JP)

(74) Representative: Hoffmann Eitle
Patent- und Rechtsanwälte PartmbB
Arabellastraße 30
81925 München (DE)

(56) References cited:
EP-A1- 1 832 729    EP-A1- 2 594 758
EP-B1- 2 488 735    DE-A1-102004 056 804

EP 2 886 819 B1

## Description

### TECHNICAL FIELD

The present invention relates to a method for manufacturing an exhaust gas purifying apparatus

### BACKGROUND ART

Particulate matter (hereinafter also referred to as PM) such as soot in exhaust gas discharged from internal combustion engines including diesel engines causes damage to environment and human bodies, and these days people have paid attention to this problem. Since exhaust gas contains toxic gas components such as CO, HC, and NOx, people also worry about the influences of the toxic gas components on the environment and human bodies.

These issues have led to the development of various exhaust gas purifying apparatuses for capturing PM in exhaust gas and converting toxic gas components. These exhaust gas purifying apparatuses include: an exhaust gas treating body made of porous ceramics such as silicon carbide or cordierite; a metal container (casing) housing the exhaust gas treating body; and a mat-shaped holding sealing material that includes inorganic fibers, and is disposed between the exhaust gas treating body and the casing.

Some main purposes of using a holding sealing material in an exhaust gas purifying apparatus are, for example: to protect the exhaust gas treating body from being damaged by contact between the exhaust gas treating body and the casing surrounding the exhaust gas treating body exhaust gas treating body. as a result of vibrations and impacts during travel of an automobile or the like; to hold the exhaust gas treating body tightly to prevent the exhaust gas treating body from slipping out from the exhaust gas purifying apparatus; and to prevent exhaust gas leakage from space between the exhaust gas treating body and the casing.

A known method for manufacturing an exhaust gas purifying apparatus is to press-fit an exhaust gas treating body wrapped with a holding sealing material into a casing. In an exhaust gas purifying apparatus manufactured by this method, the holding sealing material is compressed in the casing. Therefore, the holding sealing material is exerting a restoring force that is attributed to the elasticity of inorganic fibers and tends to bring the holding sealing material back toward its original form (that is, holding force for holding the exhaust gas treating body), and thus holds the exhaust gas treating body.

However, when an exhaust gas treating body wrapped with a holding sealing material is press-fit into a casing, the holding sealing material experiences a shear force on the main face in contact with the casing and the main face in contact with the exhaust gas treating body respectively in mutually opposite directions. Accordingly, the side faces of the holding sealing material are deformed to be partially oblique to the end faces of the exhaust gas treating body. The deformed parts of the side faces of the holding sealing material are not compressed, and unfortunately, are prone to wind erosion caused by flow of exhaust gas and reduce the holding force.

Patent Literatures 1 and 2 disclose holding sealing materials provided with an oblique face projecting forward from the inside to the outside in the press-fitting direction on the side face which is the front face in the press-fitting direction. When either of the holding sealing materials of Patent Literature 1 and 2 is wrapped around an exhaust gas treating body and press-fit into a casing, the side face of the holding sealing material is deformed. This deformation is compensated by the oblique face, so that the side face of the holding sealing material becomes substantially parallel to the end face of the

### CITATION LIST

- Patent Literature

Patent Literature 1: JP 2006-161667 A
Patent Literature 2: German Patent No. DE 10 2004 056 804 B4

### SUMMARY OF INVENTION

- Technical Problem

The techniques of Patent Literatures 1 and 2 make use of deformation of the holding sealing materials. However, the holding sealing materials do not always deform in the same manner around an exhaust gas treating body that is being press-fit into a casing, and it is difficult to quantify the holding force of the holding sealing materials of Patent Literatures 1 and 2 in the casing. When an exhaust gas purifying apparatus including either of the holding sealing materials of Patent Literatures 1 and 2 is used, a flow of exhaust gas further deforms the holding sealing material, so that the side face may become partially oblique to the end face of the exhaust gas treating body. In this case, the problems of wind erosion and reduction in the holding force may arise.

The present invention was made to overcome the above problems, and an object of the present invention is to provide: a method for manufacturing an exhaust gas purifying apparatus including the holding sealing material.

- Solution to Problem

The holding sealing exhaust gas treating body and disposed between the exhaust gas treating body and the casing,
the holding sealing material including inorganic fibers and having a mat shape with a first main face, a second main face opposite to the first main face, side faces along a longitudinal direction of the holding sealing material, and end faces along a width direction perpendicular to the longitudinal direction,
wherein the holding sealing material is plastically deformed by applying a shear stress to the first main face and the second main face respectively in mutually opposite directions along the width direction before being wrapped around an exhaust gas treating body.

The holding sealing material is plastically deformed by applying a shear stress to the two opposite main faces before being wrapped around an exhaust gas treating body. Therefore, the holding stealing material is less likely to be further deformed when the holding sealing material is wrapped around an exhaust gas treating body and press-fit into a casing in the same direction as the direction of the shear stress applied to the inner main face of the holding sealing material (the face in contact with the exhaust gas treating body). In the case where an exhaust gas purifying apparatus including the holding sealing material is used in such a manner that exhaust gas flows in the same direction as the press-fitting direction, the holding sealing material is less likely to be deformed. Thus, the holding sealing material is designed to be resistant to deformation when used in an exhaust gas purifying apparatus.

As described above, the holding sealing material is less likely to be deformed around an exhaust gas treating body that is being press-fit into a casing and in an exhaust gas purifying apparatus that is in operation, and therefore can prevent wind erosion and a reduction in the holding force. Additionally, since the holding sealing material is thus less likely to be deformed, the surface pressure of the holding sealing material measured before wrapping the holding sealing material around an exhaust gas treating body can be considered as the holding force of the holding sealing material in an exhaust gas purifying apparatus. Thus, it is easy to calculate the holding force sealing material is thus less likely to be deformed, the surface pressure of the holding sealing material measured before wrapping the holding sealing material around an exhaust gas treating body can be considered as the holding force of the holding sealing material in an exhaust gas purifying apparatus. Thus, it is easy to calculate the holding force of the holding sealing material in an exhaust gas purifying apparatus.

The holding sealing material is preferably treated by needle punching.

The needle punching entangles inorganic fibers in the holding sealing material with one another to reduce the mobility of the inorganic fibers. This facilitates the plastic deformation of the holding sealing material by applying a shear stress to the two main faces of the holding sealing material.

In the case where the holding sealing material is treated by needle punching, the shear stress is preferably applied to the first main face and the second main face such that the needle holes made by the needle punching are slanted at least 15° with respect to at least one of directions respectively perpendicular to the first main face and the second main face when viewed in a cross section parallel to the width direction.

The inorganic fibers are made less likely to return to their original state by, for example, carrying out the needle punching perpendicularly on the main faces and applying a shear stress to the two main faces such that needle holes are slanted at least 15°. This further facilitates the plastic deformation.

The holding sealing material preferably includes an organic binder.

The organic binder in the holding sealing material fixes entangled inorganic fibers, and prevents the inorganic fibers from returning into the original state, thereby facilitating the plastic deformation.

The method for producing a holding sealing material is in particular a method for producing a holding sealing material for use in an exhaust gas purifying apparatus that includes: a casing; an exhaust gas treating body housed in the casing; and the holding sealing material that is wrapped around the exhaust gas treating body and disposed between the exhaust gas treating body and the casing,
the method including: a material mat preparing step of preparing a material mat that includes inorganic fibers and has a mat shape with a first main face, a second main face opposite to the first main face, side faces along a longitudinal direction of the material mat, and end faces along a width direction perpendicular to the longitudinal direction; and
a deformation step of plastically deforming the material mat by immobilizing the first main face and the second main face of the material mat, and applying a shear stress to the first main face and the second main face respectively in mutually opposite directions along the width direction.

The method for producing a holding sealing material allows for the production of the above-described holding sealing material, that is, a holding sealing material that is plastically deformed by applying a shear stress to the first main face and the second main face respectively in mutually opposite directions along the width direction before being wrapped around an exhaust gas treating body. Therefore, the method allows for the production of a holding sealing material that is less likely to be deformed around an exhaust gas treating body that is being press-fit into a casing and in an exhaust gas purifying apparatus that is in operation, and therefore can prevent wind erosion and a reduction in the holding force, and allows for easy calculation of the holding force in an exhaust gas purifying apparatus.

The material mat prepared in the material mat preparing step of the method for producing a holding sealing material is preferably a material mat, at least one of the first main face and the second main face of which is treated by needle punching.

The needle punching is carried out on the holding sealing material to entangle inorganic fibers with one another and thereby to reduce the mobility of the inorganic fibers. This facilitates the plastic deformation of the holding sealing material by applying a shear stress to the two main faces of the holding sealing material.

In the case where a material mat treated by needle punching is prepared, the shear stress is applied to the first main face and the second main face in the deformation step preferably such that needle holes made by the needle punching are slanted at least 15° with respect to at least one of directions respectively perpendicular to the first main face and the second main face when viewed in a cross section parallel to the width direction.

In the case where the shear stress is applied to the two main faces such that needle holes are slanted at least 15°, the inorganic fibers are made less likely to return into their original state. This further facilitates the plastic deformation.

In the method for producing a holding sealing material, the material mat prepared in the material mat preparing step is a material mat impregnated with an organic binder solution, and in the deformation step, the material mat is immobilized and dried while the shear stress is applied to the first main face and the second main face.

The organic binder exerts a fixing force to maintain the shape of the holding sealing material, and therefore facilitates the plastic deformation.

The method for manufacturing an exhaust gas purifying apparatus of the present invention is the method of claim 1, in particular a method for manufacturing an exhaust gas purifying apparatus that includes: a casing; an exhaust gas treating body housed in the casing; and a holding sealing material that is wrapped around the exhaust gas treating body and disposed between the exhaust gas treating body and the casing,

the method including: preparing a wrapped body by wrapping the holding sealing material produced by the method for producing a holding sealing material around an exhaust gas treating body such that either the first main face or the second main face of the holding sealing material contacts the exhaust gas treating body; and

press-fitting the wrapped body into a casing in the same direction as the direction of the shear stress applied to the main face of the holding sealing material which is in contact with the exhaust gas treating body.

In the method for manufacturing an exhaust gas purifying apparatus of the present invention, the holding sealing material is used, and the press-fitting direction is the same as the direction of the shear stress applied to the inner main face of the holding sealing material. An advantage attributable to these features is that the holding sealing material is less likely to be deformed when the wrapped body is press-fit into the casing. Another advantage is that the holding sealing material is less likely to be deformed when the resulting exhaust gas purifying apparatus is used in such a manner that exhaust gas flows in the same direction as the press-fitting direction.

As described above, the method for manufacturing an exhaust gas purifying apparatus of the present invention allows for the manufacture of an exhaust gas purifying apparatus including a holding sealing material that is less likely to be deformed around an exhaust gas treating body that is being press-fit into a casing and in an exhaust gas purifying apparatus that is in operation, and therefore can prevent wind erosion and a reduction in the holding force, and allows for easy calculation of the holding force in an exhaust gas purifying apparatus.

The exhaust gas purifying apparatus of the present disclosure includes:

a casing;
an exhaust gas treating body housed in the casing; and
a holding sealing material that is wrapped around the exhaust gas treating body and disposed between the exhaust gas treating body and the casing,

wherein the holding sealing material is the holding sealing material of the present disclosure or the holding sealing material produced by the method for producing a holding sealing material, and is wrapped around the exhaust gas treating body such that either the first main face or the second main face of the holding sealing material contacts the exhaust gas treating body, and

the exhaust gas treating body wrapped with the holding sealing material is press-fit into the casing in the same direction as the direction of the shear stress applied to the main face of the holding sealing material which is in contact with the exhaust gas treating body.

Since the exhaust gas purifying apparatus includes a holding sealing material that is less likely to be deformed around an exhaust gas treating body that is being press-fit into a casing and in the exhaust gas purifying apparatus that is in operation, the exhaust gas purifying apparatus can prevent wind erosion and a reduction in the holding force, and allows for easy calculation of the holding force of the holding sealing material in the exhaust gas purifying apparatus.

The term "perpendicular" herein means being somewhat perpendicular enough to ensure the effects of the present invention, and may refer to being completely perpendicular or to being substantially perpendicular. The term "parallel" likewise means being somewhat parallel enough to ensure the effects of the present invention, and may refer to being completely parallel or to being substantially parallel.

BRIEF DESCRIPTION OF DRAWINGS

Fig. 1 is a perspective view schematically illustrating one example of the material mat.

Fig. 2 is a perspective cross-sectional view schematically illustrating one example of the needle-punched material mat.

Figs. 3(a) to 3(d) are cross-sectional views schematically illustrating one example of the deformation step.

Fig. 4 is a cross-sectional view schematically illustrating one example of the material mat after a cutting step.

Fig. 5(a) is a perspective view schematically illustrating one example of the holding sealing material, and Fig. 5(b) is a plan view of the holding sealing material shown in Fig. 5(a).

Fig. 6 is a perspective view schematically illustrating one example of a wrapped body including an exhaust gas treating body wrapped with a holding sealing material.

Fig. 7 is a partial perspective cross-sectional view schematically illustrating one example of the press-fitting step.

Fig. 8 is a partial perspective cross-sectional view schematically illustrating an exhaust gas purifying apparatus produced by the method for manufacturing an exhaust gas purifying apparatus of the present invention.

Fig. 9 is a perspective view schematically illustrating one example of the exhaust gas purifying apparatus.

Fig. 10 is an A-A line cross-sectional view of the exhaust gas purifying apparatus shown in Fig. 9.

Figs. 11(a) and 11(b) are schematic views of an apparatus for measuring the surface pressure of a holding sealing material.

Fig. 12 is an illustrative view schematically demonstrating how to measure a deformation quantify of a holding sealing material.

Fig. 13 (a) is a photograph of a holding sealing material of Example 2 taken before firing, and Fig. 13(b) is a photograph of the holding sealing material of Example 2 taken after firing.

Fig. 14(a) is a photograph of a holding sealing material of Example 3 taken before firing, and Fig. 14(b) is a photograph of the holding sealing material of Example 3 taken after firing.

Fig. 15(a) is a photograph of a holding sealing material of Comparative Example 1 taken before firing, and Fig. 15 (b) is a photograph of the holding sealing material of Comparative Example 1 taken after firing.

DESCRIPTION OF EMBODIMENTS

The following specifically demonstrates the present invention,

The following specifically demonstrates the present invention, but is not intended to limit the present invention. Various modifications and alterations can be made without departing from the scope of this invention.

The method for producing a holding sealing material is described first, and then the holding sealing material, the method for manufacturing an exhaust gas purifying apparatus of the present invention, and the exhaust gas purifying apparatus are described in this order.

[Method for producing holding sealing material]

The method for producing a holding sealing material is a method for producing a holding sealing material for use in an exhaust gas purifying apparatus that includes: a casing; an exhaust gas treating body housed in the casing; and a holding sealing material that is wrapped around the exhaust gas treating body and disposed between the exhaust gas treating body and the casing,

the method including: a material mat preparing step of preparing a material mat that includes inorganic fibers and has a mat shape with a first main face, a second main face opposite to the first main face, side faces along a longitudinal direction of the material mat, and end faces along a width direction perpendicular to the longitudinal direction; and a deformation step of plastically deforming the material mat by immobilizing the first main face and the second main face of the material mat, and applying a shear stress to the first main face and the second main face respectively in mutually opposite directions along the width direction.

The method for producing a holding sealing material includes a material mat preparing step of preparing a material mat that includes inorganic fibers and has a mat shape with a first main face, a second main face opposite to the first main face, side faces along a longitudinal direction of the material mat, and end faces along a width direction perpendicular to the longitudinal direction.

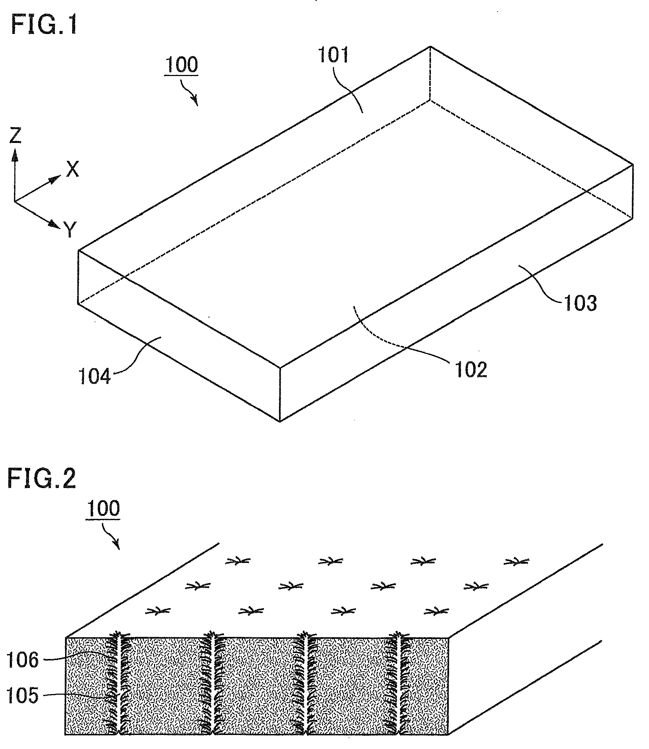

Fig. 1 is a perspective view schematically illustrating one example of the material mat.

The material mat 100 shown in Fig. 1 includes inorganic fibers, and has a mat shape with a first main face 101, a second main face 102 opposite to the first main face 101, side faces 103 along the longitudinal direction (the direction indicated by the arrow X in Fig. 1), and end faces 104 along the width direction perpendicular to the longitudinal direction X (the direction indicated by the arrow Y in Fig. 1). The arrow Z in Fig. 1 indicates the thickness direction.

The material mat can be prepared by, for example, punching out from a mat made of inorganic fibers entangled by fiber spinning.

The inorganic fibers constituting the material mat are not particularly limited, and may be alumina-silica fibers, alumina fibers, silica fibers, or the like. Alternatively, glass fibers or biosoluble fibers may be used. The inorganic fibers may be changed depending on the desired features of the holding sealing material such as heat resistance and resistance to wind erosion, and fibers with larger diameters and longer lengths, which meet the environmental requirements in various countries, are preferable.

Low-crystalline alumina inorganic fibers are preferable among these, and low-crystalline alumina inorganic fibers having a mullite composition are more preferable. Inorganic fibers including a spinel compound are more preferable. High-crystalline alumina materials, which are hard and easy to break, are not suitable for holding sealing materials, which are required to function as a cushioning material.

In the case of low-crystalline alumina inorganic fibers including a spinel compound, the crystallization rate is preferably 0.1 to 30%, and more preferably 0.4 to 20%. When inorganic fibers having a crystallization rate within these ranges are used, the holding sealing material has high repulsion and high reconstructed surface pressure as measured after a durability test, and thus has high quality. By contrast, inorganic fibers having a crystallization rate of less than 0.1% or more than 30% remarkably reduce the repulsion and reconstructed surface pressure. The crystallization rate can be calculated from the integrated intensity ratio between a diffraction peak of mullite ($2\theta = 26.4°$) and a diffraction peak of $\gamma$-alumina ($2\theta = 45.4°$).

In the case where the material mat is subjected to later-described needle punching which forms an entangled structure, the average fiber length of the inorganic fibers is preferably 4 to 120 mm. Fibers with an average fiber length within this range are entangled with one another at needle-punched sites to increase the strength of the mat. The average fiber diameter of the inorganic fibers is preferably 2 to 12 $\mu$m, and more preferably 3 to 10 $\mu$m.

The weight per unit surface area of the material mat is not particularly limited, but is preferably 400 g/m$^2$ to 2000 g/m$^2$. If the material mat has a weight per unit surface area of less than 400 g/m$^2$, the material mat may be processed into a holding sealing material that is not effective enough in protecting an exhaust gas treating body from vibrations in an exhaust gas purifying apparatus that is in operation, and therefore may cause the exhaust gas treating body to be damaged or to be slipped out from the casing. On the other hand, if the weight per unit surface area of the material mat is more than 2000 g/m$^2$, the material mat may be processed into a holding sealing material having too strong restoring force which is stronger than the strength of the exhaust gas treating body and may break the exhaust gas treating body.

The bulk density of the material mat is not particularly limited, and is preferably 0.10 to 0.30 g/cm$^3$. If the bulk density of the material mat is less than 0.10 g/cm$^3$, the inorganic fibers may not be sufficiently entangled with one another, and some inorganic fibers may easily drop off. Accordingly, the material mat tends to lose its original shape. On the other hand, if the bulk density of the material mat is more than 0.30 g/cm$^3$, the material mat is hard and easy to break.

In the material mat preparing step, it is preferable to prepare a material mat, at least one of the main faces of which is treated by needle punching (also referred to as needling treatment). Such a material mat is also referred to as a needle mat.

The needle punching refers to pushing and pulling a fiber-interlacing means such as a needle or the like in and out the substrate mat. The material mat is constituted by inorganic fibers which have a predetermined average fiber length and are entangled loosely with one another. By the needle punching, the loosely entangled inorganic fibers in the material mat are entangled more complicatedly, so that the mat has an entangled structure capable of maintaining its shape to some extent without an organic binder. Additionally, the entangled inorganic fibers are less likely to move. Accordingly, the material mat can be processed into a holding sealing material that can be easily plastically deformed by applying a shear stress to the two main faces.

The needle punching can be accomplished by using a needle punching apparatus, for example. The needle punching apparatus includes a supporting plate for supporting a material mat, and a needle board that is disposed above the supporting plate and is reciprocally movable in the pushing direction (the thickness direction of the material mat). The needle board is provided with a large number of needles. The material mat is disposed on the supporting plate, and the needle board is moved with respect to the material mat such that a large number of needles are pushed into and pulled from the material mat. This entangles the inorganic fibers of the material mat complicatedly.

The number of repetition of the needle punching and the number of needles may be determined based on the desired bulk density, weight per unit surface area, and the like.

The material mat treated by the needle punching has a plurality of needle holes made by the needle punching.

Fig. 2 is a perspective cross-sectional view schematically illustrating one example of the needle-punched material mat. Fig. 2 shows a cross section obtained by cutting a material mat along the thickness direction.

The material mat 100 shown in Fig. 2 has a plurality of needle holes 105. The needle holes 105 are surrounded by entangled inorganic fibers 106 that extend along the thickness direction of the material mat 100.

When the inorganic fibers are oriented in the same direction, the material mat is expected to be processed into a holding sealing material that can exert, when used in an exhaust gas purifying apparatus, larger forces for pushing an exhaust gas treating body and a metal container in the direction of the needle holes, that is, the direction along which the inorganic fibers are oriented.

The density of needle holes is preferably 10 to 500 holes per 100 $cm^2$ of the material mat. If the density of needle holes is less than 10 holes per 100 $cm^2$ of the material mat, a holding sealing material processed from the material mat may be torn in use. On the other hand, if the density of needle holes is more than 500 holes per 100 $cm^2$ of the material mat, a holding sealing material processed from the material mat is difficult to bend in use.

The direction of the needle punching is not particularly limited, but the needle punching is preferably carried out on at least one of the first main face and the second main face of the material mat perpendicularly, and more preferably on both the first main face and the second main face of the material mat perpendicularly. In other words, the material mat preferably has needle holes that extend perpendicularly in at least one of the first main face and the second main face of the material mat, and more preferably has needle holes that extend perpendicularly in the first main face and the second main face of the material mat.

As described above, the term "perpendicular" herein means being somewhat perpendicular enough to ensure the effects of the present invention, and may refer to being completely perpendicular or to being substantially perpendicular. For example, the angle range of approximately 80 to 100° to either main face of the material mat is acceptable.

In the material mat preparing step, a material mat with a binder, such as an organic binder, affixed thereto is preferably prepared although the material mat may be or may not be treated by the needle punching.

The binder affixed to the material mat further fixes the entangled inorganic fibers, and reduces the bulk of the material mat. Additionally, the organic binder fixes entangled inorganic fibers and prevents the fibers from returning their original state, thereby facilitating the plastic deformation.

Examples of methods for affixing the binder to the material mat include a method involving blowing a predetermined amount of a binder solution to the material mat with a spray or the like, and a method involving impregnating the material mat into a binder solution.

As the binder solution, an emulsion obtained by dispersing an organic binder such as an acrylic resin in water can be used. The binder solution may optionally contain an inorganic binder such as silica sol or alumina sol.

The organic binder preferably contains at least one selected from, but not particularly limited to, acrylic resin, acryl rubber, acrylonitrile-butadiene rubber, and styrene-butadiene rubber.

The amount of organic binder affixed is preferably 0.2 to 12.0 g/100 g of inorganic fibers (0.2 to 12.0% by weight), and more preferably 4.0 to 10.0 g/100 g of inorganic fibers (4.0 to 10.0% by weight) on a solids content basis.

If the amount of organic binder affixed is less than 0.2 g/100 g of inorganic fibers on a solids content basis, the amount is too little and is not effective enough to sufficiently fix the entangled inorganic fibers. On the other hand, if the amount of organic binder affixed is more than 12.0 g/100 g of inorganic fibers on a solids content basis, too much organic binder is present and is decomposed to unfavorably produce a large amount of toxic gas when a holding sealing material processed from the material mat is used in an exhaust gas purifying apparatus.

The weight loss of the holding sealing material by heating at 600°C for 1 hour is preferably 0.2 to 12.0%, and more preferably 4.0 to 10.0% when the weight of the holding sealing material before the heating is regarded as 100%. The weight loss of the holding sealing material by heating at 600°C for 1 hour corresponds to the amount of organic binder contained in the holding sealing material.

Thereafter, the material mat is dried to remove the water content in the organic binder solution. Optionally, the material mat with the organic binder affixed thereto may be compressed during the drying. For example, the following drying conditions can be applied: 95°C to 150°C, for 1 to 30 minutes.

The drying of the material mat may be carried out before or after a later-described deformation step. How to dry the material mat in the deformation step is demonstrated later.

The method for producing a holding sealing material includes a deformation step of plastically deforming the prepared material mat by immobilizing the first main face and the second main face of the material mat, and applying a shear stress to the first main face and the second main face respectively in mutually opposite directions along the width direction.

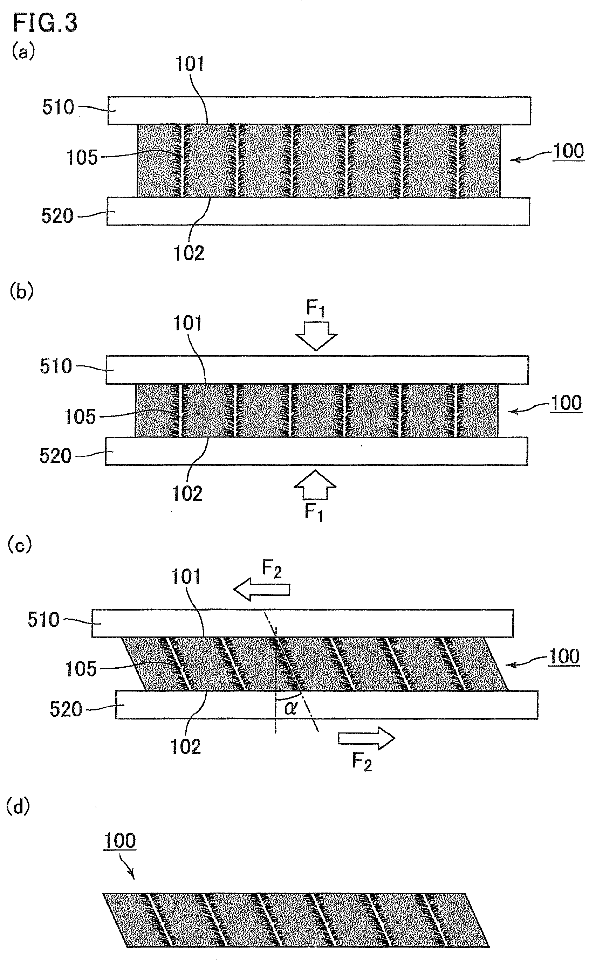

Figs. 3(a) to 3(d) are cross-sectional views schematically illustrating one example of the deformation step.

Figs. 3(a) to 3(d) show an example demonstrating how a needle-punched material mat is plastically deformed. In Figs. 3 (a) to 3 (d), an end face of the material mat is aligned at the front. The lateral direction in Figs. 3(a) to 3(d) corresponds to the width direction of the material mat.

First, as shown in Fig. 3(a), the material mat 100 is sandwiched between an upper base 510 and a lower base 520 at the first main face 101 and the second main face 102.

In Fig. 3(a), needle holes 105 are made perpendicularly to the first main face 101 and the second main face 102 of the material mat 100.

Next, as shown in Fig. 3(b), a pressing force $F_1$ is applied to the first main face 101 and the second main face 102 of the material mat 100 in the thickness direction of the material mat 100 (the vertical directions in Fig. 3(b)). The pressing forces $F_1$ compress the material mat 100 to immobilize the first main face 101 and the second main face 102 of the material mat 100.

In the deformation step, the material mat is compressed preferably to 45 to 95% of the original material mat thickness. Considering that the resulting holding sealing material is to be disposed between an exhaust gas treating body and a casing for the exhaust gas purifying apparatus (described later), the thickness of the compressed material mat is preferably 120 to 300% of the space between the exhaust gas treating body and the casing.

Subsequently, as shown in Fig. 3(c), a shear stress $F_2$ is applied to the first main face 101 and the second main face 102 of the material mat 100 respectively in the mutually opposite directions along the width direction of the material mat 100 while the material mat 100 is immobilized. The shear stresses $F_2$ slant the side faces of the material mat 100 to plastically deform the material mat 100. The deformation of the material mat 100 is accompanied by slanted needle holes 105.

The extent of the plastic deformation of the material mat is not particularly limited, but the material mat is preferably deformed such that in a cross section parallel to the width direction of the material mat, at least either of a hypothetical line perpendicular to the first main face of the material mat and a hypothetical line perpendicular to the second main face of the material mat moves an angle of at least 15°, more preferably at least 20°, before and after the deformation (this angle is referred to as deformation angle). The deformation angle is preferably at most 40°, and more preferably at most 30°.

Specifically, it is preferable to prepare a material mat, one or both of the first main face and the second main face of which is/are treated by the needle punching, and to apply a shear stress to the first main face and the second main face such that needle holes are slanted at least 15° with respect to at least one of directions respectively perpendicular to the first main face and the second main face when viewed in a cross section parallel to the width direction of the material mat. Alternatively, it is preferable to prepare a material mat, at least one of the first main face and the second main face of which is treated by the needle punching perpendicularly, and to apply a shear stress to the first main face and the second main face such that needle holes are slanted at least 15° with respect to at least one of the directions respectively perpendicular to the first main face and the second main face when viewed in a cross section parallel to the width direction of the material mat. In particular, it is preferable to prepare a material mat, both the first main face and the second main face of which are treated by the needle punching perpendicularly, and to apply a shear stress to the first main face and the second main face such that needle holes are slanted at least 15° with respect to the direction perpendicular to both the first main face and the second main face of the material mat when viewed in a cross section parallel to the width direction of the material mat. In these cases, the inorganic fibers are made less likely to return to their original state, thereby further facilitating the plastic deformation.

In Fig. 3(c), the angle of the needle holes 105 described above is indicated by $\alpha$.

The angle $\alpha$ of the needle holes is preferably at least 15°, and more preferably at least 20°. In addition, the angle $\alpha$ of the needle holes is preferably at most 40°, and more preferably at most 30°.

In the material mat preparing step of the method for producing a holding sealing material, a material mat impregnated with an organic binder solution is prepared, and in the deformation step, the material mat is immobilized and dried while a shear stress is applied to the first main face and the second main face of the material mat. In this case, the organic binder has holding force to maintain the shape of the holding sealing material, thereby facilitating the plastic deformation. The material mat is more preferably a needle mat.

In this step, the drying temperature is preferably 95°C to 150°C, and the drying period is preferably 1 to 30 minutes. The preferable range of the deformation angle and the preferable range of the needle hole angle $\alpha$ are the same as those described above.

The immobilization of the material mat shown in Fig. 3(b) and the plastic deformation of the material mat shown in Fig. 3(c) may be carried out at the same time. As long as the material mat is immobilized, the material mat may not be necessarily compressed.

Thereafter, the upper base 510 and the lower base 520 are removed as shown in Fig. 3(d). Thus, the plastically deformed material mat 100 is obtained.

The method for producing a holding sealing material of the present invention preferably further includes a cutting step of cutting the plastically deformed material mat such that the material mat has side faces perpendicular to at least one of the first main face and the second main face.

The method for producing a holding sealing material of the present invention provides a holding sealing material that is less likely to be deformed in an exhaust gas purifying apparatus. Therefore, in the case where the side faces are perpendicular to the main faces of the holding sealing material in the state of not being wrapped around an exhaust gas treating body yet, it is unlikely that the side faces partially become slanted with respect to the end faces of the exhaust gas treating body.

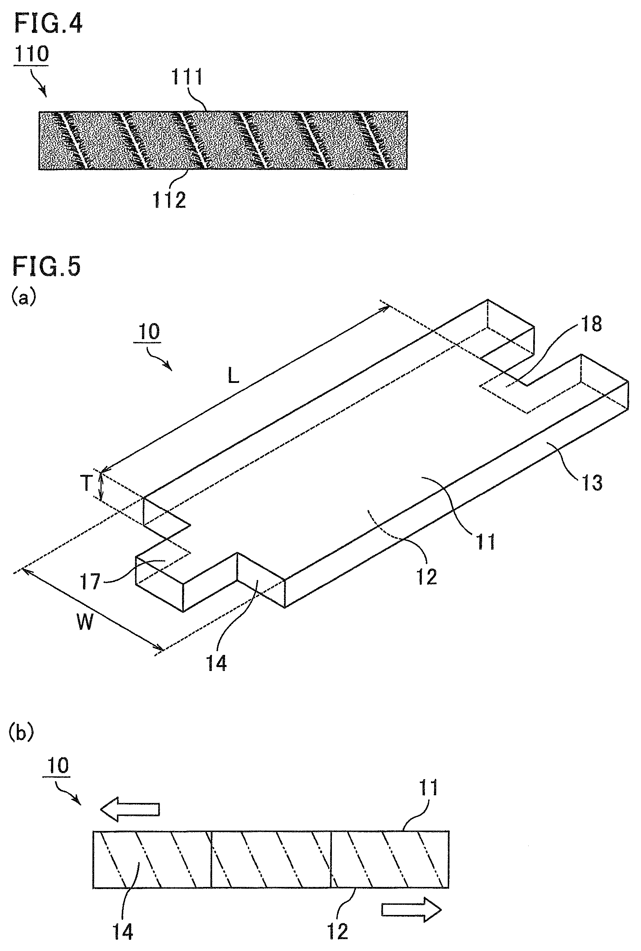

Fig. 4 is a cross-sectional view schematically illustrating one example of the material mat after the cutting step.

The material mat 110 shown in Fig. 4 is a piece cut out from the plastically deformed material mat 100 shown in Fig. 3 (d). The side face of the material mat 110 shown in Fig. 4 is perpendicular to both the first main face 111 and the second main face 112.

In the cutting step, the plastically deformed material mat is preferably cut in such a manner to have side faces perpendicular to at least one of the first main face and the second main face of the material mat, and more preferably to have side faces perpendicular to both the first main face and the second main face of the material mat.

The cutting of the material mat can be accomplished by punching out a predetermined shape from the material mat.

Any method and device for punching the material mat can be used without particular limitation, and conventionally known methods can be used.

An example of usable punching blades is a Thomson blade designed to have the same shape as a desired punching pattern of the material mat, and an example of usable punching devices is an oil hydraulic pressing machine.

Thus, the method for producing a holding sealing material preferably includes the cutting step, but a material mat may be formed into a holding sealing material by the deformation step without performing the cutting step.

Through the above-described steps, a holding sealing material can be produced.

The holding sealing material produced by the method for producing a holding sealing material can be used for an exhaust gas purifying apparatus. The holding sealing material produced by the method for producing a holding sealing material is also one aspect of the present disclosure. The holding sealing material and the exhaust gas purifying apparatus are described in detail later.

[Holding sealing material]

The holding sealing material is a holding use in an exhaust gas purifying apparatus that includes: a casing; an exhaust gas treating body housed in the casing; and the holding sealing material that is wrapped around the exhaust gas treating body and disposed between the exhaust gas treating body and the casing,

the holding sealing material including inorganic fibers and having a mat shape with a first main face, a second main face opposite to the first main face, side faces along a longitudinal direction of the holding sealing material, and end faces along a width direction perpendicular to the longitudinal direction,

wherein the holding sealing material is plastically deformed by applying a shear stress to the first main face and the second main face respectively in mutually opposite directions along the width direction before being wrapped around the exhaust gas treating body.

Fig. 5(a) is a perspective view schematically illustrating one example of the holding sealing material, and Fig. 5(b) is a plan view of the holding sealing material shown in Fig. 5(a). In Fig. 5(b), an end face of the holding sealing material is aligned at the front. The lateral direction in Fig. 5(b) corresponds to the width direction of the holding sealing material.

The holding sealing material 10 shown in Fig. 5 (a) is a mat having a rectangular shape with a predetermined longitudinal length (indicated by the arrow L in Fig. 5(a)), a predetermined width (indicated by the arrow W in Fig. 5(a)) and a predetermined thickness (indicated by the arrow T in Fig. 5(a)) when viewed in a plan view.

The holding sealing material 10 has a first main face 11, a second main face 12 opposite to the first main face 11, side faces 13 along the longitudinal direction of the holding sealing material, and end faces 14 along the width direction perpendicular to the longitudinal direction. In the holding sealing material 10, one of the ends in the longitudinal direction of the mat has a projection 17, and the other end has a recess 18. The projection 17 and the recess 18 are designed to be engaged with each other when the holding sealing material 10 is wrapped around an exhaust gas treating body in the process of assembling a later-described exhaust gas purifying apparatus. Namely, the longitudinal direction of the holding sealing material is the same as the wrapping direction.

The longitudinal length L of a mat herein refers to the length of the mat excluding the projection and the recess at the ends of the mat.

The holding sealing material 10 shown in Fig. 5 (b) is plastically deformed by applying a shear stress to the first main face 11 and the second main face 12 respectively in the mutually opposite directions (the directions indicated by the arrows in Fig. 5(b)) along the width direction. In Fig. 5(b), broken lines are drawn on the end face 14 of the holding sealing material 10 for ease of understanding.

The longitudinal length L of the mat is preferably within the range of the length of the circumference of the columnar exhaust gas treating body to be wrapped with the mat $\pm$ 95 mm. In the case where the longitudinal length L of the mat is within the above range, the holding sealing material can be wrapped around the exhaust gas treating body without gap, and therefore is not displaced or twisted.

The width W of the mat is preferably shorter by 5 to 15 mm than the longitudinal length of the exhaust gas treating body.

The thickness T of the mat is preferably 5 to 15 mm.

The holding sealing material is a mat including inorganic fibers.

The inorganic fibers constituting the holding sealing material are the same as the inorganic fibers constituting the material mat described in [Method for producing holding sealing material], and therefore the description thereof is omitted. The average fiber length and the average fiber diameter of the inorganic fibers are also the same as those described above.

At least one of the main faces of the holding sealing material is preferably treated by the needle punching. The needle-punched holding sealing material has a plurality of needle holes made by the needle punching.

In the needle-punched holding sealing material, the inorganic fibers are entangled with one another, and are less likely to move. Accordingly, the holding sealing material can be plastically deformed easily by applying a shear stress to the two main faces of the holding sealing material.

The needle punching is as described in [Method for producing holding sealing material].

The holding sealing material preferably contains an organic binder.

The organic binder in the holding sealing material fixes entangled inorganic fibers, and prevents the inorganic fibers from returning into the original state, thereby facilitating the plastic deformation.

The organic binder used in the holding sealing material is the same as the organic binder affixed to the material mat described in [Method for producing holding sealing material], and the description thereof is omitted. The amount of organic binder used in the holding sealing material is the same as the amount of organic binder affixed to the material mat.

The holding sealing material is preferably produced by the [Method for producing holding sealing material] described above.

Therefore, in the case where the holding sealing material is treated by the needle punching, the shear stress is preferably applied to the first main face and the second main face such that the angle of needle holes with respect to at least one of directions respectively perpendicular to the first main face and the second main face is at least 15°in a cross section parallel to the width direction. In particular, the shear stress is preferably applied to the first main face and the second main face such that the angle of needle holes is at least 15° with respect to the direction perpendicular to both the first main face and the second main face in the cross section parallel to the width direction. One or both of the first main face and the second main face of the holding sealing material is/are preferably treated by the needle punching before the application of the shear stress. More preferably, at least one of the first main face and the second main face of the holding sealing material is treated by the needle punching perpendicularly, and further more preferably, both the first main face and the second main face of the holding sealing material are treated by the needle punching perpendicularly.

For example, in the case where after the main faces of the holding sealing material are treated by the needle punching perpendicularly, the shear stress is applied to the two main faces such that the angle of needle holes become at least 15°, the inorganic fibers are made less likely to return to their original state, thereby facilitating the plastic deformation of the holding sealing material.

The holding sealing material can be produced by the method for producing a holding sealing material, but is not limited only to those produced by the method for producing a holding sealing material, provided that it meets the feature that "the holding sealing material is plastically deformed by applying a shear stress to the first main face and the second main face respectively in mutually opposite directions along the width direction of the holding sealing material before being wrapped around an exhaust gas treating body".

The side faces of the holding sealing material are preferably perpendicular to at least one of the first main face and the second main face of the holding sealing material, and more preferably perpendicular to both the first main face and the second main face when the holding sealing material is not wrapped around an exhaust gas treating body yet.

The holding sealing material is less likely to be deformed in an exhaust gas purifying apparatus. Therefore, in the case where the side faces are perpendicular to the main faces of the holding sealing material in the state of not being wrapped around an exhaust gas treating body yet, it is unlikely that the side faces partially become slanted with respect to the end faces of the exhaust gas treating body.

The holding sealing material is not limited to a structure including a single mat, and may be a laminate of two or more mats.

In the case where the holding sealing material is a laminate of two or more mats, all the mats are preferably deformed plastically, but the laminate may include mat (s) which is/are not plastically deformed. In the case where the holding sealing material includes a plurality of plastically deformed mats, all the mats are plastically deformed preferably to the same extent but may be plastically deformed to different extents.

The holding sealing material is intended to be used in an exhaust gas purifying apparatus. The exhaust gas purifying apparatus is described in detail later.

The holding sealing material and the holding sealing material produced by the method for producing a holding sealing material preferably have a surface pressure reduction rate, as determined in a manner described later in EXAMPLES, of not more than 15% or have a deformation quantity, as determined in a manner described later in EXAMPLES, of not more than 2 mm, and more preferably meets both of these features.

[Method for manufacturing exhaust gas purifying apparatus]

The method for manufacturing an exhaust gas purifying apparatus of the present invention is a method for manufacturing an exhaust gas purifying apparatus that includes: a casing; an exhaust gas treating body housed in the casing; and a holding sealing material that is wrapped around the exhaust gas treating body and disposed between the exhaust gas treating body and the casing,

the method including:

a wrapped body preparing step of preparing a wrapped body by wrapping the holding sealing material or the holding sealing material produced by the method for producing a holding

sealing material around an exhaust gas treating body such that either the first main face or the second main face of the holding sealing material contacts the exhaust gas treating body; and

a press-fitting step of press-fitting the wrapped body into a casing in the same direction as the direction of the shear stress applied to the main face of the holding sealing material which is in contact with the exhaust gas treating body.

In the method for manufacturing an exhaust gas purifying apparatus of the present invention, a holding sealing material preparing step for preparing the holding sealing material or the holding sealing material produced by the method for producing a holding sealing material is carried out first of all.

The holding sealing material and the holding sealing material produced by the method for producing a holding sealing material are described as above in [Holding sealing material] and [Method for producing holding sealing material].

In the method for manufacturing an exhaust gas purifying apparatus of the present invention, it is preferable to prepare a holding sealing material that has side faces perpendicular to at least one of the first main face and the second main face when the holding sealing material is not wrapped around an exhaust gas treating body yet, and is more preferable to prepare a holding sealing material having side faces perpendicular to both the first main face and the second main face.

The holding sealing material and the holding sealing material produced by the method for producing a holding sealing material are less likely to be deformed when used in an exhaust gas purifying apparatus. Therefore, in the case where the side faces are perpendicular to the main faces of the holding sealing material in the state of not being wrapped around an exhaust gas treating body yet, it is unlikely that the side faces partially become slanted with respect to the end faces of the exhaust gas treating body.

Next, in the method for manufacturing an exhaust gas purifying apparatus of the present invention, the wrapped body preparing step is carried out in which a wrapped body is prepared by wrapping the prepared holding sealing material around an exhaust gas treating body such that either the first main face or the second main face of the holding sealing material contacts the exhaust gas treating body.

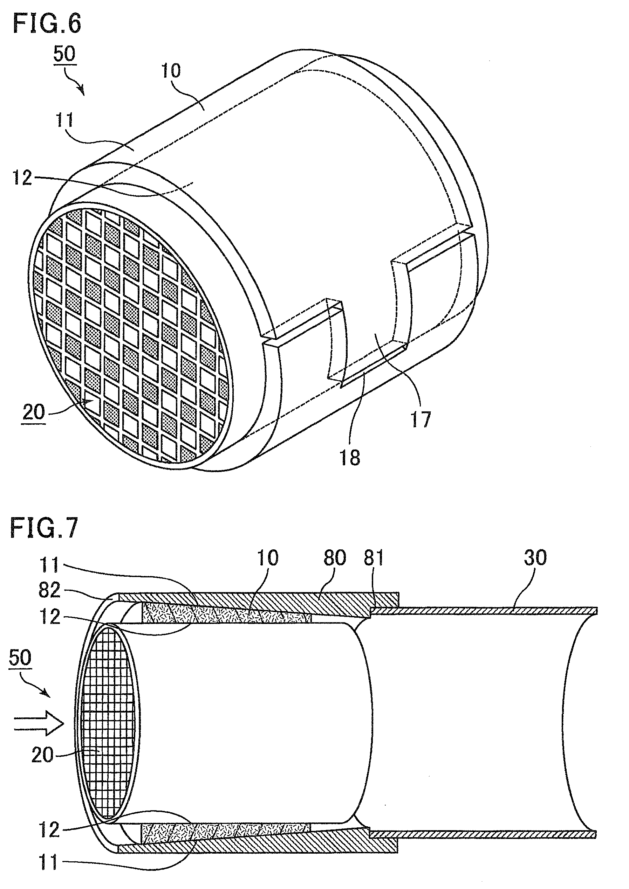

Fig. 6 is a perspective view schematically illustrating one example of a wrapped body including an exhaust gas treating body wrapped with a holding sealing material.

The wrapped body 50 shown in Fig. 6 including an exhaust gas treating body 20 around which the holding sealing material 10 shown in Figs. 5 (a) and 5(b) is wrapped such that the second main face 12 of the holding sealing material 10 contacts the exhaust gas treating body 20. The projection 17 and the recess 18 of the holding sealing material are engaged with each other.

Subsequently, in the method for manufacturing an exhaust gas purifying apparatus of the present invention, the press-fitting step is carried out in which the prepared wrapped body is press-fit into a casing.

In the press-fitting step, the wrapped body is press-fit into the same direction as the direction of the shear stress applied to the main face of the holding sealing material which is in contact with the exhaust gas treating body.

Fig. 7 is a partial perspective cross-sectional view schematically illustrating one example of the press-fitting step.

In Fig. 7, the wrapped body 50 shown in Fig. 6 is press-fit into the casing 30. As described above, in the wrapped body 50 shown in Fig. 6, the holding sealing material 10 is wrapped around the exhaust gas treating body 20 such that the second main face 12 of the holding sealing material 10 contacts the exhaust gas treating body 20.

Accordingly, the press-fitting direction indicated by the arrow is the same as the direction of the shear stress applied to the main face (i.e. the second main face 12) of the holding sealing material 10 which is in contact with the exhaust gas treating body 20.

Fig. 7 shows how to press-fit the wrapped body 50 into the casing 30 using a press-fitting jig 80.

The press-fitting jig 80 entirely has a substantially cylindrical shape, and the inside thereof is tapering from one end to the other end.

One of the ends of the press-fitting jig 80 is a smaller-diameter end 81 having an inner diameter slightly smaller than the inner diameter of the casing 30. The other end of the press-fitting jig 80 is a larger-diameter end 82 having an inner diameter that is equal to or larger than the outer diameter of the wrapped body 50.

The use of the press-fitting jig 80 facilitates press-fitting the wrapped body 50 into the casing 30.

Any method for press-fitting the wrapped body into the casing can be used without particular limitation, and the wrapped body may be press-fit into the casing by hands, for example.

In the method for manufacturing an exhaust gas purifying apparatus of the present invention, the casing may be compressed from the outside using a pressing machine or the like to reduce the inner diameter of the casing, and thereby to hold the wrapped body.

Through the above steps, an exhaust gas purifying apparatus can be produced.

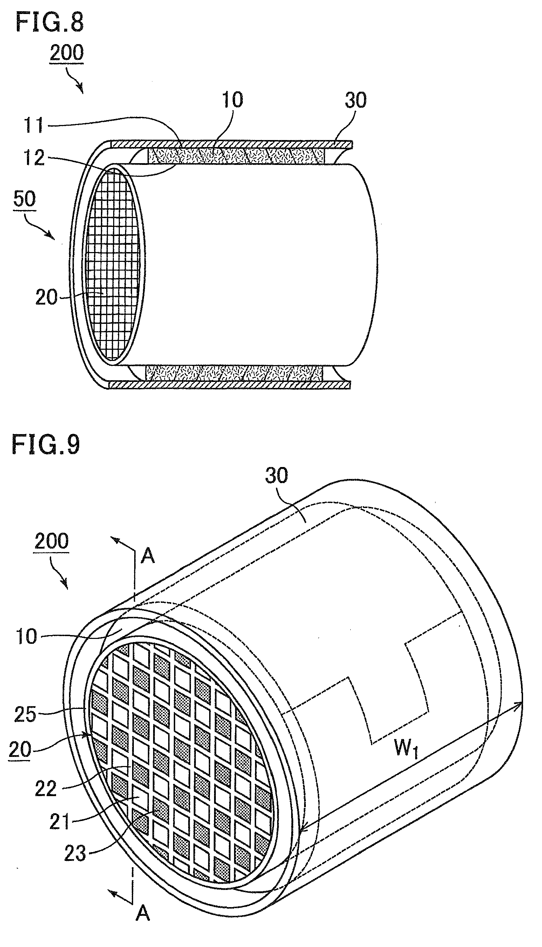

Fig. 8 is a partial perspective cross-sectional view schematically illustrating an exhaust gas purifying apparatus produced by the method for manufacturing an exhaust gas purifying apparatus of the present invention.

The holding sealing material 10 used in the exhaust gas purifying apparatus 200 shown in Fig. 8 is plastically deformed before the press-fitting step, and therefore is less likely to be deformed even after the press-fitting step. Even when the exhaust gas purifying apparatus 200 is used in such a manner that exhaust gas flows in the same direction as the press-fitting direction, the holding sealing material 200 is less likely to be deformed.

[Exhaust gas purifying apparatus]

The exhaust gas purifying apparatus includes:

>	a casing;
>	an exhaust gas treating body housed in the casing; and
>	a holding sealing material that is wrapped around the exhaust gas treating body and disposed between the exhaust gas treating body and the casing,

wherein the holding sealing material is the holding sealing material or the holding sealing material produced by the method for producing a holding sealing material, and is wrapped around the exhaust gas treating body such that either the first main face or the second main face of the holding sealing material contacts the exhaust gas treating body, and the exhaust gas treating body wrapped with the holding sealing material is press-fit into the casing in the same direction as the direction of the shear stress applied to the main face of the holding sealing material which is in contact with the exhaust gas treating body.

Fig. 9 is a perspective view schematically illustrating one example of the exhaust gas purifying apparatus.

The exhaust gas purifying apparatus 200 shown in Fig. 9 includes an exhaust gas treating body 20, a casing 30 housing the exhaust gas treating body 20, and a holding sealing material 10 that is wrapped around the exhaust gas treating body 20, and disposed between the exhaust gas treating body 20 and the casing 30.

The exhaust gas purifying apparatus 200 is an example including the holding sealing material 10 shown in Fig. 5.

The casing 30 shown in Fig. 9 is mainly made of a metal such as stainless steel, and has a cylindrical shape. The inner diameter thereof is slightly smaller than the total of the diameter of the end face of the exhaust gas treating body 20 and the thickness of the holding sealing material 10 in the state of being wrapped around the exhaust gas treating body 20, and the length thereof is substantially the same as the length of the exhaust gas treating body 20 along the longitudinal direction

The structure of the holding sealing material 10 has been already described, and therefore the description thereof is omitted.

As shown in Fig. 9, the exhaust gas purifying apparatus 200 is provided with a honeycomb filter 20 in which each of cells 21 is sealed at either end with a sealing material 23, as the exhaust gas treating body 20.

The honeycomb filter 20 is mainly made of porous ceramics, and has a round pillar shape. The honeycomb filter 20 further includes, on the periphery of the honeycomb filter 20, a sealing material layer 25 for reinforcing the periphery of the honeycomb filter 20, adjusting the shape of the honeycomb filter 20, and improving the heat insulation properties of the honeycomb filter 20.

The shape of the exhaust gas treating body in the exhaust gas purifying apparatus is not particularly limited, and may not be the substantially round pillar shape. The exhaust gas treating body may have any shape, such as a substantially cylindroid shape or a substantially rectangular columnar shape, and may have any size, provided that it has a columnar shape.

The exhaust gas treating body in the exhaust gas purifying apparatus may be an integrated honeycomb structured body made of cordierite or the like, or an aggregated honeycomb structured body in which a plurality of pillar-shaped honeycomb fired bodies each of which is made of silicon carbide or the like, and includes cells arranged parallel to one another with a cell wall interposed therebetween are bonded to one another with an adhesive layer mainly made of ceramics.

A catalyst may be supported on the exhaust gas treating body in the exhaust gas purifying apparatus.

Examples of the catalyst include: noble metals such as platinum, palladium, and rhodium; alkali metals such as potassium and sodium; alkaline earth metals such as barium; metal oxides such as cerium oxide; and the like. Any of these catalysts may be used alone, or two or more of these may be used in combination.

In the case where the exhaust gas treating body in the exhaust gas purifying apparatus is a honeycomb structured body, the cells may not be sealed with the sealing material and may have open ends. In this case, a catalyst such as platinum is supported on the exhaust gas treating body so that the exhaust gas treating body functions as a catalyst carrier for converting toxic gas components such as CO, HC, and NOx in exhaust gas.

The exhaust gas purifying apparatus n can be manufactured by the [Method for manufacturing exhaust gas purifying apparatus] described above.

Specifically, in the exhaust gas purifying apparatus 200 shown in Fig. 9, the holding sealing material 10 is wrapped around the exhaust gas treating body 20 such that the second main face 12 of the holding sealing material 10 contacts the exhaust gas treating body 20. The exhaust gas treating body 20 wrapped with the holding sealing material 10 is press-fit into the casing 30 in the same direction as the direction of the shear stress applied to the main face (i.e. the second main face 12) of the holding sealing material 10 which is in contact with the exhaust gas treating body 20.

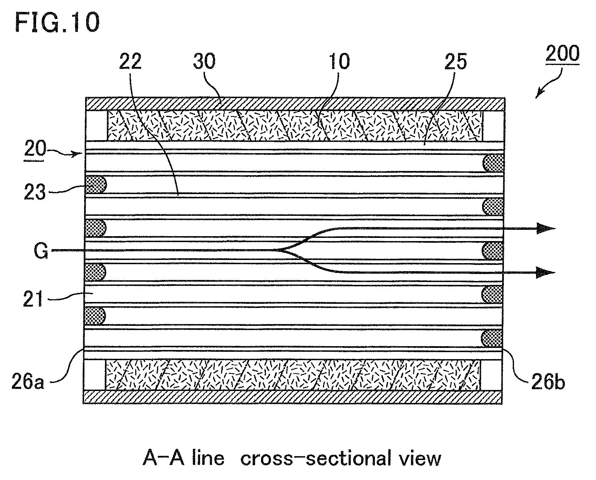

The following demonstrates how exhaust gas flows through the exhaust gas purifying apparatus having the above-described structure based on Fig. 10.

Fig. 10 is an A-A line cross-sectional view of the exhaust gas purifying apparatus shown in Fig. 9.

As shown in Fig. 10, exhaust gas discharged from an internal combustion engine (exhaust gas is indicated by G and the flow of the exhaust gas is indicated by the arrow in Fig. 10) flows into the exhaust gas purifying apparatus 200, specifically into a cell 21 that is open at the exhaust gas flow-in end 26a of the honeycomb filter 20, and passes through a cell wall 22 separating cells 21. At this time, PM in the exhaust gas is captured in the cell wall 22, and thus the exhaust gas is purified. The purified exhaust gas flows out from another cell 21 that is open at the exhaust gas flow-out end 26b, and thus is discharged to the outside.

The exhaust gas purifying apparatus is used in such a manner that exhaust gas flows into the apparatus in the same direction as the press-fitting direction (e.g. the direction of the shear stress applied to the main face of the holding sealing material which is in contact with the exhaust gas treating body). As described above, since the holding sealing material is already plastically deformed, the holding sealing material is less likely to be deformed even through exhaust gas flows in the same direction as the press-fitting direction.

The following describes the effects of the holding sealing material, the method for producing a holding sealing material, a method for manufacturing an exhaust gas purifying apparatus, and the exhaust gas purifying apparatus.

(1) The holding sealing material is plastically deformed by applying a shear stress to the two opposite main faces before being wrapped around an exhaust gas treating body. Therefore, the holding sealing material is less likely to be further deformed when the holding sealing material is wrapped around an exhaust gas treating body and press-fit into a casing in the same direction as the direction of the shear stress applied to the inner main face of the holding sealing material (the face in contact with the exhaust gas treating body). In the case where an exhaust gas purifying apparatus including the holding sealing material is used in such a manner that exhaust gas flows in the same direction as the press-fitting direction, the holding sealing material is less likely to be deformed. Thus, the holding sealing material is designed to be resistant to deformation when used in an exhaust gas purifying apparatus.

(2) The holding sealing material is less likely to be deformed around an exhaust gas treating body that is being press-fit into a casing and in an exhaust gas purifying apparatus that is in operation, and therefore can prevent wind erosion and a reduction in the holding force. Additionally, since the holding sealing material is thus less likely to be deformed, the surface pressure of the holding sealing material measured before wrapping the holding sealing material around an exhaust gas treating body can be considered as the holding force of the holding sealing material in an exhaust gas purifying apparatus. Thus, it is easy to calculate the holding force of the holding sealing material in an exhaust gas purifying apparatus.

(3) The method for producing a holding sealing material allows for the production of the above-described holding sealing material, that is, a holding sealing material that is plastically deformed by applying a shear stress to the first main face and the second main face respectively in mutually opposite directions along the width direction before being wrapped around an exhaust gas treating body. Therefore, the method allows for the production of a holding sealing material that is less likely to be deformed around an exhaust gas treating body that is being press-fit into a casing and in an exhaust gas purifying apparatus that is in operation, and therefore can prevent wind erosion and a reduction in the holding force, and allows for easy calculation of the holding force in an exhaust gas purifying apparatus.

(4) In the method for manufacturing an exhaust gas purifying apparatus of the present invention, the holding sealing material is used, and the press-fitting direction is the same as the direction of the shear stress applied to the inner main face of the holding sealing material. An advantage attributable to these features is that the holding sealing material is less likely to be deformed when the wrapped body is press-fit into the casing. Another advantage is that the holding sealing material is less likely to be deformed when the resulting exhaust gas purifying apparatus is used in such a manner that exhaust gas flows in the same direction as the press-fitting direction.

(5) The method for manufacturing an exhaust gas purifying apparatus of the present invention allows for the manufacture of an exhaust gas purifying apparatus including a holding sealing material that is less likely to be deformed around an exhaust gas treating body that is being press-fit into a casing and in an exhaust gas purifying apparatus that is in operation, and therefore can prevent wind erosion and a reduction in the holding force, and allows for easy calculation of the holding force in an exhaust gas purifying apparatus.

(6) Since the exhaust gas purifying apparatus includes a holding sealing material that is less likely to be deformed around an exhaust gas treating body that is being press-fit into a casing and in the exhaust gas purifying apparatus that is in operation, the exhaust gas purifying apparatus can avoid wind erosion and a reduction in the holding force, and allows for easy calculation of the holding force of the holding sealing material in the exhaust gas purifying apparatus.

EXAMPLES

The following shows examples specifically illustrating the present invention. It should be noted that the present invention is not limited only to these examples.

[Production of holding sealing material]

(Example 1)

A base mat made of alumina fibers having an alumina-silica composition was prepared. The base mat had a composition rate $Al_2O_3:SiO_2$ of 72:28. The base mat was subjected to needle punching into a needle mat (material mat) having thickness of 9.7 mm, a bulk density of 0.18 g/cm$^3$, and a weight per unit surface area of 1740 g/m$^2$.

Next, the needle mat was cut into dimensions as viewed in a plan view of 150 mm (total length) × 70 mm (width).

The cutting of the needle mat was carried out with a Thomson blade and an oil hydraulic pressing machine.

The cut-out needle mat was impregnated with a binder solution to a binder content of 10% by weight relative to the amount of alumina fibers in the needle mat.

The binder solution used was an acrylic latex emulsion obtained by sufficiently dispersing an acrylic resin in water.

The needle mat impregnated with the binder solution was plastically deformed by applying a shear stress to the first main face and the second main face respectively in the mutually opposite directions along the width direction.

Specifically, lines perpendicular to the first main face and the second main face of the needle mat were drawn on the end faces of the needle mat, and the needle mat was deformed by applying a shear stress such that the angle formed by each line before and after the deformation (deformation angle) was 40°, and then the deformed mat was immobilized. At this time, the deformed mat was compressed to 80% of the original thickness.

Thereafter, through drying at an atmospheric temperature of 140°C for 10 minutes, a deformed needle mat was prepared.

Finally, the deformed needle mat was cut into dimensions as viewed in a plan view of 50 mm (total length) × 50 mm (width) such that the side faces of the needle mat were perpendicular to the first main face and the second main face. In this manner, a holding sealing material of Example 1 was prepared.

(Example 2)

A needle mat (material mat) was prepared and cut into dimensions as viewed in a plan view of 150 mm (total length) × 70 mm (width) in the same manner as in Example 1. The cut needle mat was impregnated with a binder solution.

The needle mat was plastically deformed in the same manner as in Example 1 except that the deformation angle was changed to 30°.

Finally, the deformed needle mat was cut into dimensions as viewed in a plan view of 50 mm (total length) × 50 mm (width) in the same manner as in Example 1 such that the side faces of the needle mat were perpendicular to the first main face and the second main face. In this manner, a holding sealing material of Example 2 was prepared.

(Example 3)

A needle mat (material mat) was prepared and cut into dimensions as viewed in a plan view of 150 mm (total length) $\times$ 70 mm (width) in the same manner as in Example 1. The cut needle mat was impregnated with a binder solution.

The needle mat was plastically deformed in the same manner as in Example 1 except that the deformation angle was changed to 15°.

Finally, the deformed needle mat was cut into dimensions as viewed in a plan view of 50 mm (total length) $\times$ 50 mm (width) in the same manner as in Example 1 such that the side faces of the needle mat were perpendicular to the first main face and the second main face. In this manner, a holding sealing material of Example 3 was prepared.

(Example 4)

A needle mat (material mat) was prepared and cut into dimensions as viewed in a plan view of 150 mm (total length) $\times$ 70 mm (width) in the same manner as in Example 1. The cut needle mat was impregnated with a binder solution.

The needle mat was plastically deformed in the same manner as in Example 1 except that the deformation angle was changed to 1°.

Finally, the deformed needle mat was cut into dimensions as viewed in a plan view of 50 mm (total length) $\times$ 50 mm (width) in the same manner as in Example 1 such that the side faces of the needle mat were perpendicular to the first main face and the second main face. In this manner, a holding sealing material of Example 4 was prepared.

(Comparative Example 1)

A needle mat (material mat) was prepared and cut into dimensions as viewed in a plan view of 150 mm (total length) $\times$ 70 mm (width) in the same manner as in Example 1. The cut needle mat was impregnated with a binder solution.

No shear stress was applied to the needle mat in Comparative Example 1. Namely, the needle mat of Comparative Example 1 was not deformed.

Specifically, lines perpendicular to the first main face and the second main face of the needle mat were drawn on the end faces of the needle mat, and the needle mat was compressed to 80% of the original thickness, and immobilized. The deformation angle of Comparative Example 1 was regarded as 0° for ease of comparison.

Thereafter, the mat was dried at an atmospheric temperature of 140°C for 10 minutes. Thus, an undeformed needle mat was prepared.

Finally, the undeformed needle mat was cut into dimensions as viewed in a plan view of 50 mm (total length) $\times$ 50 mm (width) such that the side faces of the needle mat were perpendicular to the first main face and the second main face. In this manner, a holding sealing material of Comparative Example 1 was prepared.

[Evaluation of holding sealing material]

(1) Surface pressure reduction rate of holding sealing material

The holding sealing materials of Examples 1 to 4 and Comparative Example 1 were calculated for the surface pressure reduction rate in the manner described below, and thus were each evaluated by a simulation for a change in the surface pressure caused when an exhaust gas treating body wrapped with the holding sealing material was press-fit into a casing.

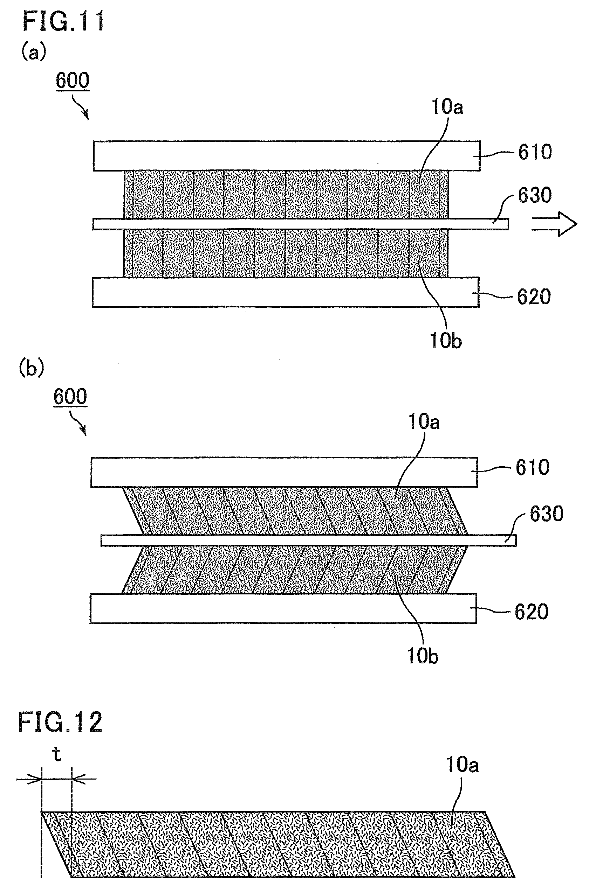

Figs. 11(a) and 11(b) are schematic views of an apparatus for measuring the surface pressure of a holding sealing material.

A surface pressure measuring apparatus 600 is provided with facing stainless steel plates (upper plate 610 and lower plate 620) disposed one above the other. The upper plate 610 is a load cell that can measure the load applied to the lower face of the upper plate 610 (which is a face to be in contact with the holding sealing material).

First, two holding sealing materials 10a and 10b and a stainless steel plate (a middle plate 630) were disposed such that the upper plate 610, the holding sealing material 10a, the middle plate 630, the holding sealing material 10b, and the lower plate 620 are arranged in the stated order. The holding sealing material 10a was sandwiched between the upper plate 610 and the middle plate 630, and the holding sealing material 10b was sandwiched between the middle plate 630 and the lower plate 620. The middle plate 630 is a load cell that can measure the load (static friction) applied to the middle plate.

The holding sealing materials were compressed into 50% of the original thickness, and then left (maintained) for 1 hour in the compressed state.

The holding sealing materials were measured for the surface pressure in this state and the measured values were treated as the initial surface pressures $P_0$ (kPa) of the holding sealing materials.

Next, the middle plate 630 was moved at room temperature in the direction indicated by the arrow in Fig. 11(a) (substantially horizontally) at 1.0 mm/min to apply a shear stress to the main faces of the holding sealing materials.

In Fig. 11(b), the middle plate is in a moved position.

The middle plate was pulled in the same direction as the direction of the shear stress applied to the main faces of the holding sealing materials which were in contact with the middle plate.

The surface pressure and friction were measured while the middle plate was moved, and the load measured when the dynamic friction became stable was recorded as the final surface pressure $P_1$ (kPa).

The surface pressure reduction rate (%) of the holding sealing materials was calculated from the obtained data.

$$\text{Surface pressure reduction rate (\%)} = \{(P_0 - P_1)/(P_0)\} \times 100$$

Table 1 shows the surface pressure reduction rates of the holding sealing materials of Examples 1 to 4 and Comparative Example 1.

The calculated surface pressure reduction rates were used to evaluate how much the surface pressure of each holding sealing material was reduced when the exhaust gas treating body wrapped with the holding sealing material was press-fit into a casing.

(2) Deformation quantity of holding sealing material

The holding sealing materials of Examples 1 to 4 and Comparative Example 1 were measured for deformation quantity in the manner described below, and thus were each evaluated by a simulation for the deformation quantity caused when an exhaust gas treating body wrapped with the holding sealing material was press-fit into a casing.

Fig. 12 is an illustrative view schematically demonstrating how to measure the deformation quantify of a holding sealing material.

As shown in Fig. 12, the holding sealing material 10a was measured for the deformation quantity (the length t shown in Fig. 12) in a cross section parallel to the width direction after the measurement of the final surface pressure $P_1$, and the obtained length was regarded as the deformation quantity (mm) of the holding sealing material.

Table 1 shows the deformation quantities of the holding sealing materials of Examples 1 to 4 and Comparative Example 1.

The obtained deformation quantities were used to evaluate how much each holding sealing material was deformed upon press-fitting an exhaust gas treating body wrapped with the holding sealing material into a casing.

(3) Recovery rate of deformation angle

Holding sealing materials which were prepared separately from the samples tested above under the same conditions as in Examples 1 to 4 and Comparative Example 1 were determined for a recovery rate of the deformation angle after firing at a high temperature.

The holding sealing materials were measured for the deformation angle before and after firing at an atmospheric temperature of 600°C for 1 hour, and the following equation was used to calculate the recovery rate (%) of the deformation angle.

$$\text{Recovery rate (\%) of deformation angle} = \{(\text{deformation angle before firing} - \text{deformation angle after firing})/(\text{deformation angle before firing})\} \times 100$$

Table 1 shows the recovery rates of the deformation angle of the holding sealing materials of Examples 1 to 4 and Comparative Example 1.

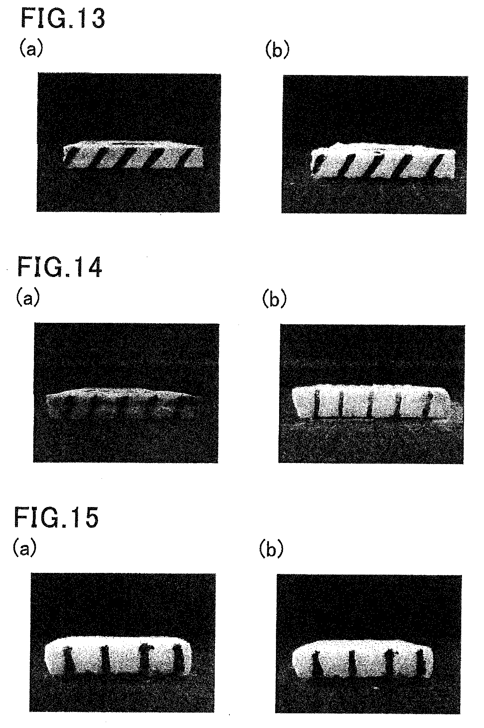

Figs. 13(a) and 13(b) are photographs of the holding sealing material of Example 2 taken before and after firing, Figs. 14(a) and 14(b) are photographs of the holding sealing material of Example 3 taken before and after firing, and Figs. 15(a) and 15(b) are photographs of the holding sealing material of Comparative Example 1 taken before and after firing.

In Table 1, holding sealing materials that met the following two requirements are shown as "+": the surface pressure reduction rate is not more than 15%; and the deformation quantity is not more than 2 mm, holding sealing materials that met either of the requirements are shown as "±", and holding sealing materials that met neither of the requirements are shown as "-". Among the holding sealing materials evaluated as "+", the holding sealing material that showed the best performance is shown as "++".

[Table 1]

| | Deformation angle | Surface pressure reduction rate | Deformation quantity | Recovery rate | Evaluation |
|---|---|---|---|---|---|
| Example 1 | 40° | 14.8% | 3.3mm | 0% | ± |
| Example 2 | 30° | 0.5% | 0mm | 6.7% | ++ |
| Example 3 | 15° | 7.2% | 1.8mm | 40% | + |
| Example 4 | 1° | 14.3% | 3.2mm | 100% | ± |
| Comparative Example 1 | 0° | 18.9% | 4.1 mm | Not measured | - |

The results revealed that the holding sealing materials of Examples 1 to 4 that were plastically deformed in advance by applying a shear stress to the main faces had a surface pressure reduction rate of not more than 15%, and that these holding sealing materials are less likely to show a reduction in the surface pressure when a shear stress is further applied thereto. In particular, the holding sealing material of Example 2, which had a deformation angle of 30°, and the holding sealing material of Example 3, which had a deformation angle of 15°, were found to have a small deformation quantity (not more than 2 mm) as well as a small surface pressure reduction rate (not more than 15%).

The results also revealed that the holding sealing material of Comparative Example 1 that was not plastically deformed by applying a shear stress to the main faces showed a reduction in the surface pressure, and was deformed when a shear stress was applied thereto.

From these results, the holding sealing material that is plastically deformed by applying a shear stress to the main faces is less likely to be deformed around an exhaust gas treating body that is being press-fit into a casing and in an exhaust gas purifying apparatus that is in operation, and therefore can prevent wind erosion and a reduction in the holding force.

An essential feature of the holding sealing material is that the holding sealing material is plastically deformed by applying a shear stress to the first main face and the second main face respectively in mutually opposite directions along the width direction before being wrapped around an exhaust gas treating body. An essential feature of the method for producing a holding sealing material is that a material mat is plastically deformed by applying a shear stress to the first main face and the second main face of the material mat in the mutually opposite directions along the width direction. Essential features of the method for manufacturing an exhaust gas purifying apparatus of the present invention are that the holding sealing material or the holding sealing material produced by the method for producing a holding sealing material is used, and that the wrapped body is press-fit into the same direction as the direction of the shear stress applied to the main face of the holding sealing material which is in contact with the exhaust gas treating body. Essential features of the exhaust gas purifying apparatus are that the exhaust gas purifying apparatus includes the holding sealing material or the holding sealing material produced by the method for producing a holding sealing material, and that an exhaust gas treating body wrapped with the holding sealing material is press-fit into a casing in the same direction as the direction of the shear stress applied to the main face of the holding sealing material which is in contact with the exhaust gas treating body.

These essential features can be combined with the other features described in the detailed description of the invention (e.g. the structure of the holding sealing material, the conditions for the production of a holding sealing material, the structure of the exhaust gas purifying apparatus, the conditions for the manufacture of an exhaust gas purifying apparatus) to produce desired effects.

REFERENCE SIGNS LIST

10, 10a, 10b    Holding sealing material
11              First main face of holding sealing material
12              Second main face of holding sealing material
13              Side face of holding sealing material
14              End face of holding sealing material

| 17 | Projection of holding sealing material |
|---|---|
| 18 | Recess of holding sealing material |
| 20 | Exhaust gas treating body |
| 30 | Casing |
| 50 | Wrapped body |
| 100, 110 | Material mat |
| 101, 111 | First main face of material mat |
| 102, 112 | Second main face of material mat |
| 103 | Side face of material mat |
| 104 | End face of material mat |
| 105 | Needle hole |
| 106 | Inorganic fiber |
| 200 | Exhaust gas purifying apparatus |

**Claims**

1. A method for manufacturing an exhaust gas purifying apparatus that includes: a casing (30); an exhaust gas treating body (20) housed in the casing (30); and a holding sealing material (10, 10a, 10b) that is wrapped around the exhaust gas treating body (20) and disposed between the exhaust gas treating body (20) and the casing (30), the method comprising:

   producing the holding sealing material (10, 10a, 10b) by a method for producing a holding sealing material (10, 10a, 10b) comprising:

      a material mat preparing step of preparing a material mat (100, 110) that comprises inorganic fibers and has a mat shape with a first main face (101, 111), a second main face (102, 112) opposite to the first main face, side faces (103) along a longitudinal direction of the material mat, and end faces (104) along a width direction perpendicular to the longitudinal direction; and
      a deformation step of plastically deforming the material mat (100, 110) by immobilizing the first main face (101, 111) and the second main face (102, 112) of the material mat, and applying a shear stress to the first main face (101, 111) and the second main face (102, 112) respectively in mutually opposite directions along the width direction,

   wherein the material mat (100, 110) prepared in the material mat preparing step is a material mat impregnated with an organic binder solution, and
   in the deformation step, the material mat (100, 110) is immobilized and dried while the shear stress is applied to the first main face and the second main face;
   preparing a wrapped body (50) by wrapping the holding sealing material (10, 10a, 10b) around the exhaust gas treating body (20) such that either the first main face (11) or the second main face (12) of the holding sealing material (10, 10a, 10b) contacts the exhaust gas treating body (20); and
   press-fitting the wrapped body (50) into a casing (30) in the same direction as the direction of the shear stress applied to the main face of the holding sealing material (10, 10a, 10b) which is in contact with the exhaust gas treating body (20).

2. The method for manufacturing an exhaust gas purifying apparatus according to claim 1,
   wherein, in the method for producing a holding sealing material, the material mat (100, 110) prepared in the material mat preparing step is a material mat, at least one of the first main face (101, 111) and the second main face (102, 112) of which is treated by needle punching.

3. The method for manufacturing an exhaust gas purifying apparatus according to claim 2,
   wherein in the deformation step in the method for producing a holding sealing material, the shear stress is applied to the first main face (101, 111) and the second main face (102, 112) such that needle holes made by the needle punching are slanted at least 15° with respect to at least one of directions respectively perpendicular to the first main face (101, 111) and the second main face (102, 112) when viewed in a cross section parallel to the width direction.

**Patentansprüche**

1. Verfahren zum Herstellen einer Abgasreinigungsvorrichtung, die beinhaltet: ein Gehäuse (30); einen Abgasbehandlungskörper (20), der in dem Gehäuse (30) eingehaust ist; und ein Halte-Abdichtmaterial (10, 10a, 10b) das um den Abgasbehandlungskörper (20) gewickelt und zwischen dem Abgasbehandlungskörper (20) und dem Gehäuse (30) angeordnet ist, wobei das Verfahren umfasst:

   Herstellen des Halte-Abdichtmaterials (10, 10a, 10b), durch ein Verfahren zum Herstellen eines Halte-Abdichtmaterials (10, 10a, 10b), umfassend:

   einen Vorbereitungsschritt für eine Materialmatte zum Vorbereiten einer Materialmatte (100, 110), die anorganische Fasern aufweist und eine Mattenform mit einer ersten Hauptfläche, einer zweiten Hauptfläche (102, 112), die gegenüber der ersten Hauptfläche ist, Seitenflächen (103) entlang einer Längsrichtung der Materialmatte und Endflächen (104) entlang einer breiten Richtung senkrecht zu der Längsrichtung aufweist; und
   einen Deformationsschritt zum plastischen Deformieren der Materialmatte (100, 110) durch ein Festlegen der.ersten Hauptfläche (101, 111) und der zweiten Hauptfläche (102, 112) der Materialmatte und jeweils Aufbringen einer Scherspannung an der ersten Hauptfläche (101, 111) und der zweiten Hauptfläche (102, 112) in entgegengesetzten Richtungen entlang der Breitenrichtung,

   wobei die Materialmatte (100, 110), die in dem Vorbereitungsschritt für die Materialmatte vorbereitet wird, eine Materialmatte ist, die mit einer organischen Bindelösung imprägniert ist, und
   wobei in dem Deformationsschritt die Materialmatte (100, 110) festgelegt und getrocknet wird, während die Scherspannung an der ersten Hauptfläche und der zweiten Hauptfläche aufgebracht wird;
   Vorbereiten eines gewickelten Körpers (50) durch Wickeln des Halte-Abdichtmaterials (10, 10a, 10b) um den Abgasbehandlungskörper (20), sodass entweder die erste Hauptfläche (11) oder die zweiter Lauffläche (12) des Halte-Abdichtmaterials (10, 10a, 10b) den Abgasbehandlungskörper (20) kontaktiert; und
   Einpressen des gewickelten Körpers (50) in ein Gehäuse (30) in derselben Richtung wie die Richtung der Scherspannung, die auf die Hauptfläche des Halte-Abdichtmaterials (10, 10a, 10b) aufgebracht wird, die in Kontakt mit dem Abgasbehandlungskörper (20) ist.

2. Verfahren zum Herstellen einer Abgasreinigungsvorrichtung nach Anspruch 1,
   wobei in dem Verfahren zum Herstellen eines Halte-Abdichtmaterials die Materialmatte (100, 110), die in dem Vorbereitungsschritt für die Materialmatte vorbereitet wird, eine Material Matte ist, bei der mindestens eine der ersten Hauptfläche (101, 111) und der zweiten Hauptfläche (102, 112) mit einem Nadelstechen behandelt wird.

3. Verfahren zum Herstellen einer Abgasreinigungsvorrichtung nach Anspruch 2,
   wobei in dem Deformationsschritt in dem Verfahren zum Herstellen eines Halte-Abdichtmaterials die Scherspannung an der ersten Hauptfläche (101, 111) und der zweiten Hauptfläche (102, 112) aufgebracht wird, sodass die Nadellöcher, die durch das Nadelstechen hergestellt werden, um mindestens 15° bezüglich mindestens einer der Richtungen jeweils senkrecht zu der ersten Hauptfläche (101, 111) und der zweiten Hauptfläche (102, 112) geneigt sind, wenn in einem Querschnitt parallel zu der Breitenrichtung betrachtet.

**Revendications**

1. Procédé de fabrication d'un appareil de purification de gaz d'échappement qui comporte : un carter (30) ; un corps de traitement de gaz d'échappement (20) logé dans le carter (30) ; et un matériau d'étanchéité de maintien (10, 10a, 10b) qui est enveloppé autour du corps de traitement de gaz d'échappement (20) et disposé entre le corps de traitement de gaz d'échappement (20) et le carter (30), le procédé comprenant :

   la production du matériau d'étanchéité de maintien (10, 10a, 10b) par un procédé de production d'un matériau d'étanchéité de maintien (10, 10a, 10b) comprenant :

   une étape de préparation de mat de matériau consistant à préparer un mat de matériau (100, 110) qui comprend des fibres inorganiques et a une forme de mat avec une première face principale (101, 111), une seconde face principale (102, 112) opposée à la première face principale, des faces de côté (103) le long d'une direction longitudinale du mat de matériau, et des faces d'extrémité (104) le long d'une direction de la largeur perpendiculaire à la direction longitudinale ; et

une étape de déformation consistant à déformer plastiquement le mat de matériau (100,110) en immobilisant la première face principale (101, 111) et la seconde face principale (102, 112) du mat de matériau, et en appliquant une contrainte de cisaillement à la première face principale (101, 111) et à la seconde face principale (102, 112) respectivement dans des directions mutuellement opposées le long de la direction de la largeur,

dans lequel le mat de matériau (100, 110) préparé à l'étape de préparation de mat de matériau est un mat de matériau imprégné d'une solution de liant organique, et

à l'étape de déformation, le mat de matériau (100, 110) est immobilisé et séché tandis que la contrainte de cisaillement est appliquée à la première face principale et à la seconde face principale ;

la préparation d'un corps enveloppé (50) en enveloppant le matériau d'étanchéité de maintien (10, 10a, 10b) autour du corps de traitement de gaz d'échappement (20) de sorte que la première face principale (11) ou la seconde face principale (12) du matériau d'étanchéité de maintien (10, 10a, 10b) entre en contact avec le corps de traitement de gaz d'échappement (20) ; et

l'ajustement à la presse du corps enveloppé (50) dans un carter (30) dans la même direction que la direction de la contrainte de cisaillement appliquée à la face principale du matériau d'étanchéité de maintien (10, 10a, 10b) qui est en contact avec le corps de traitement de gaz d'échappement (20).

2. Procédé de fabrication d'un appareil de purification de gaz d'échappement selon la revendication 1, dans lequel, dans le procédé de production d'un matériau d'étanchéité de maintien, le mat de matériau (100, 110) préparé à l'étape de préparation de mat de matériau est un mat de matériau, dont au moins l'une de la première face principale (101, 111) et de la seconde face principale (102, 112) est traitée par aiguillage.

3. Procédé de fabrication d'un appareil de purification de gaz d'échappement selon la revendication 2, dans lequel, à l'étape de déformation dans le procédé de production d'un matériau d'étanchéité de maintien, la contrainte de cisaillement est appliquée à la première face principale (101, 111) et à la seconde face principale (102, 112) de sorte que des piqûres d'aiguille réalisées par l'aiguilletage sont inclinées d'au moins 15° par rapport à au moins l'une des directions respectivement perpendiculaires à la première face principale (101, 111) et à la seconde face principale (102, 112) vues en coupe parallèle à la direction de la largeur.

FIG.1

FIG.2

FIG.3

(a)

(b)

(c)

(d)

# FIG.4

## 110

# FIG.5

## (a)

## 10

## (b)

## 10

FIG.6

FIG.7

FIG.8

FIG.9

## FIG.10

A-A line cross-sectional view

FIG.11

(a)

FIG.12

## FIG.13
(a)                                    (b)

## FIG.14
(a)                                    (b)

## FIG.15
(a)                                    (b)

**EP 2 886 819 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006161667 A
- DE 102004056804 B4